# EUROPEAN PATENT APPLICATION

(11) **EP 2 784 119 A1**
(43) Date of publication of application: **01.10.2014**
(21) Application number: 12851611.9
(22) Date of filing: 26.10.2012
(51) Int. Cl.: C08L 67/02, B29C 45/00, C08K 3/00, C08L 67/00, C08L 87/00, B29L 31/34

(54) **ELECTRICAL ELECTRONIC COMPONENT USING FLAME RETARDANT POLYESTER RESIN COMPOSITION**

(30) Priority: 24.11.2011 JP 2011256753
(71) Applicant: Kaneka Corporation, Osaka-shi, Osaka 530-8288 (JP)
(72) Inventor: YAMAMOTO, Tetsuro, Osaka 566-0072 (JP); SAEGUSA, Kazunori, Osaka 566-0072 (JP)
(74) Representative: Vossius & Partner
(86) International application number: PCT/JP2012/006888
(87) International publication number: WO 2013/076918

(57) **Abstract**

An object of the invention is to provide an electric/electronic component including a flame-retardant polyester-based resin composition, which uses no halogen-based flame retardant, has high flame retardancy, and can withstand long-term continuous use at high temperature. The electric/electronic component includes a flame-retardant polyester-based resin composition containing 100 parts by weight of a thermoplastic polyester-based resin (A), 5 to 80 parts by weight of a polymer-type organophosphorus flame retardant (B) whose main chain has a polyester structure, 1 to 20 parts by weight of an amorphous thermoplastic super engineering plastic (C), 5 to 120 parts by weight of a fibrous inorganic compound (D), and 5 to 50 parts by weight of a non-fibrous inorganic compound (E).

## Description

### Technical Field

The present invention relates to an electric/electronic component using a flame-retardant polyester-based resin composition that uses no halogen-based flame retardant, has high flame retardancy, and can withstand long-term continuous use at high temperature.

### Background Art

Thermoplastic polyester-based resins typified by polyalkylene terephthalates are widely used in components of electric/electronic devices, automobiles, and the like due to their excellent properties. In recent years, fire-safety requirements, particularly for electric/electronic devices, tend to become stringent, and therefore resin materials for use in components constituting such devices are often required to have high flame retardancy. In many cases, a halogen-based flame retardant is conventionally used to impart flame retardancy to a resin material because a good balance between flame retardancy and other physical properties is easily achieved. However, there is a case where an acidic gas is produced during incineration disposal, a toxic gas is produced at a fire site, or a problem of marine pollution or the like is caused. Therefore, in recent years, there has been an increasing demand for a halogen-free flame retardant due to an increasing environmental awareness, and thus it has become necessary to address a demand for a halogen-free flame-retardant resin material.

Further, with an increase in the number of such components used in an end product, the density of the components is increased, an external environment for using the end product becomes severe, for example, the installation space of the end product is limited, the amount of heat generation is increased due to an increase in electric power consumption, or heat dissipation becomes difficult due to a decrease in the size and weight of the components themselves, and as a result, the components are required to stably operate at higher temperature than ever before, thus resulting in an increasing demand also for a heat-resistant resin material.

Particularly, electric/electronic devices typified by fusers for OA equipment, transformers, power module devices, and inverter devices operate at high temperature and are exposed to high voltage, and therefore resin materials for use in components thereof (hereinafter, referred to as electric/electronic components) are also required to have both heat resistance and flame retardancy. Further, it is desired that such resin materials have flame retardancy imparted by a technique not using halogens.

For example, Patent Document 1 discloses an example of a bobbin for coils in high-voltage transformers or ignition devices. Patent Document 1 shows examples using a glass-reinforced polybutylene terephthalate resin (PBT) and states that another resin such as a composite polyethylene terephthalate resin (PET) can also be used. The flame retardancy of PBT used in these examples is rated HB in accordance with the UL-94 standard, and therefore it is desired that a material having higher flame retardancy be selected for safety.

For example, Patent Document 2 discloses an example of a power module device including a semiconductor device sealed with a polyamide resin. Patent document 2 states that the material of a case of the power module device is preferably a polyphenylene sulfide resin (PPS), PBT, a thermoplastic polyamide, a thermoplastic polyethylene, or a thermoplastic polyester.

Patent Document 3 discloses an inverter device (which is a kind of power module device) including an IGBT chip as a high current-capable semiconductor device, and states that PBT is preferred as a material of a resin case of the inverter device. However, in these patent documents, there is no detailed description about the flame retardancy of the case material. Therefore, it is desired that a demand for flame retardancy be addressed.

In prior art documents including the above patent documents, there is no description about the necessity of flame retardancy for fuser components for OA equipment, coil bobbins, or materials of cases (also referred to as casings or enclosures), insulating plates, or insulating sheets of power module devices or inverter devices. On the other hand, it is easy to assume that it is advantageous for the above products to have high flame retardancy in terms of laws and regulations and various standards. However, there is no known halogen-free flame-retardant polyester-based resin that can be stably used in a high-temperature environment at near 130°C or higher. Known flame-retardant resins in practical use are only halogen-based flame-retardant polyester-based resins and PPS.

However, as described above, halogen-based flame-retardant polyester-based resins cause a problem in case of fire or during incineration disposal, and in the case of PPS, the harmful effect of a sulfur-containing acidic gas may become a problem. For this reason, it is desired that a technique not using such resins be developed.

Patent Document 1_{:} JP-A-8-124779
Patent Document 2: JP-A-2003-86722
Patent Document 3: JP-A-8-236667

### DISCLOSURE OF THE INVENTION

### Problems to be Solved by the Invention

An object of the present invention is to obtain an electric/electronic component comprising a flame-retardant polyester-based resin composition, which uses no halogen-based flame retardant, has high flame retardancy, and can withstand long-term continuous use at high temperature.

### Means for Solving the Problems

The present inventors have intensively studied, and as a result, have found that the above object can be achieved by providing an electric/electronic component comprising a composition obtained by blending a thermoplastic polyester-based resin with a phosphorus-based flame retardant having a specific structure, an amorphous thermoplastic super engineering plastic, a fibrous inorganic compound, and a non-fibrous inorganic compound, which has led to the completion of the present invention.

More specifically, the present invention is directed to an electric/electronic component comprising a flame-retardant polyester-based resin composition containing 100 parts by weight of a thermoplastic polyester-based resin (A), 5 to 80 parts by weight of a polymer-type organophosphorus flame retardant (B) whose main chain has a polyester structure, 1 to 20 parts by weight of an amorphous thermoplastic super engineering plastic (C), 5 to 120 parts by weight of a fibrous inorganic compound (D), and 5 to 50 parts by weight of a non-fibrous inorganic compound (E).

According to a preferred embodiment of the present invention, the thermoplastic polyester-based resin (A) is a polyalkylene terephthalate.

According to a preferred embodiment of the present invention, the flame-retardant polyester-based resin composition has a relative thermal index of 140°C or higher for all three kinds of strength, impact, and electric properties specified in UL 746B.

According to a preferred embodiment of the present invention, the flame-retardant polyester-based resin composition has Thermal Class B (130°C) or higher as rated by a heat-resistant life evaluation test specified in UL 1446.

According to a preferred embodiment of the present invention, the flame-retardant polyester-based resin composition has a comparative tracking index of 200 V or higher as determined by a tracking resistance test specified in UL 746A.

According to a preferred embodiment of the present invention, the electric/electronic component is intended to be used when an input voltage of 100 V or higher is applied thereto.

According to a preferred embodiment of the present invention, the electric/electronic component is a fuser component for OA equipment obtained by injection molding or insert molding of the flame-retardant polyester-based resin composition.

According to a preferred embodiment of the present invention, the electric/electronic component is a coil component, a transformer component, or a relay component obtained by injection molding or insert molding of the flame-retardant polyester-based resin composition.

According to a preferred embodiment of the present invention, the electric/electronic component is a power module component or inverter component that is obtained by injection molding or insert molding of the flame-retardant polyester-based resin composition and that has a rated voltage of 400 V or higher and two or more metal terminals attached thereto.

### Effects of the Invention

The electric/electronic component according to the present invention can exhibit excellent flame retardancy without using a halogen-based flame retardant and can withstand long-term continuous use at high temperature, and is therefore industrially useful and can be suitably used as a component for electric/electronic devices, OA equipment, and the like for use in a high-temperature environment.

### PREFERRED MODE FOR CARRYING OUT THE INVENTION

### (Thermoplastic polyester-based resin (A))

A thermoplastic polyester-based resin (A) used in the present invention refers to a saturated polyester resin obtained using a divalent acid, such as terephthalic acid, or a derivative thereof having ester-forming ability as an acid component and a glycol having 2 to 10 carbon atoms, another dihydric alcohol, or a derivative thereof having ester-forming ability as a glycol component. Among such thermoplastic polyester-based resins, a polyalkylene terephthalate resin is preferred for its excellent balance of processability, mechanical properties, electric properties, and heat resistance. Specific examples of the polyalkylene terephthalate resin include a polyethylene terephthalate resin, a polytrimethylene terephthalate resin, a polybutylene terephthalate resin, and a polyhexamethylene terephthalate resin. Among them, a polyethylene terephthalate resin is particularly preferred for its excellent heat resistance and chemical resistance.

If necessary, the thermoplastic polyester-based resin (A) used in the present invention may be copolymerized with another component to the extent that its physical properties are not significantly reduced. As such a copolymerizable component, a known acid component, a known alcohol component and/or a known phenol component, or a derivative thereof having ester-forming ability can be used.

Examples of the copolymerizable acid component include divalent or higher-valent aromatic carboxylic acids having 8 to 22 carbon atoms, divalent or higher-valent aliphatic carboxylic acids having 4 to 12 carbon atoms, divalent or higher-valent alicyclic carboxylic acids having 8 to 15 carbon atoms, and derivatives thereof having ester-forming ability. Specific examples of the copolymerizable acid component include terephthalic acid, isophthalic acid, naphthalenedicarboxylic acid, bis(p-carbodiphenyl)methaneanthracenedicarboxylic acid, 4-4'-biphenyldicarboxylic acid, 1,2-bis(phenoxy)ethane-4,4'-dicarboxylic acid, 5-sodium sulfoisophthalic acid, adipic acid, sebacic acid, azelaic acid, dodecanedioic acid, maleic acid, trimesic acid, trimellitic acid, pyromellitic acid, 1,3-cyclohexanedicarboxylic acid, 1,4-cyclohexanedicarboxylic acid, and derivatives thereof having ester-forming ability. These copolymerizable acid components may be used singly or in combination of two or more of them. Among them, terephthalic acid, isophthalic acid, and naphthalenedicarboxylic acid are preferred for the reason that a resulting resin has excellent physical properties, handleability, and ease of reaction.

Examples of the copolymerizable alcohol component and/or phenol component include dihydric or higher-hydric aliphatic alcohols having 2 to 15 carbon atoms, dihydric or higher-hydric alicyclic alcohols having 6 to 20 carbon atoms, dihydric or higher-hydric aromatic alcohols having 6 to 40 carbon atoms, dihydric or higher-hydric phenols, and derivatives thereof having ester-forming ability.

Specific examples of the copolymerizable alcohol component and/or phenol component include compounds such as ethylene glycol, propanediol, butanediol, hexanediol, decanediol, neopentyl glycol, cyclohexanedimethanol, cyclohexanediol, 2,2'-bis(4-hydroxyphenyl)propane, 2,2'-bis(4-hydroxycyclohexyl)propane, hydroquinone, glycerin, and pentaerythritol, derivatives thereof having ester-forming ability, and cyclic esters such as ε-caprolactone. Among them, ethylene glycol and butanediol are preferred for the reason that a resulting resin has excellent physical properties, handleability, and ease of reaction.

Further, a polyalkylene glycol unit may be partially copolymerized. Specific examples of a polyoxyalkylene glycol include polyethylene glycol, polypropylene glycol, polytetramethylene glycol, and random or block copolymers thereof, and modified polyoxyalkylene glycols such as alkylene glycol (polyethylene glycol, polypropylene glycol, polytetramethylene glycol, and a random or block copolymer thereof) adducts of bisphenol compounds. Among them, a polyethylene glycol adduct of bisphenol A having a molecular weight of 500 to 2000 is preferred for the reason that thermal stability during copolymerization is excellent and a reduction in the heat resistance of a molded body is less likely to occur.

These thermoplastic polyester-based resins may be used singly or in combination of two or more of them.

The thermoplastic polyester-based resin (A) used in the present invention can be produced by a known polymerization method such as melt polycondensation, solid-phase polycondensation, or solution polymerization. Further, in order to improve the color tone of the resin during polymerization, one or two or more of compounds such as phosphoric acid, phosphorous acid, hypophosphorous acid, monomethyl phosphate, dimethyl phosphate, trimethyl phosphate, methyldiethyl phosphate, triethyl phosphate, triisopropyl phosphate, tributyl phosphate, and triphenyl phosphate may be added.

Further, in order to increase the crystallinity of a resulting thermoplastic polyester-based resin, various commonly well-known organic or inorganic crystal nucleating agents may be added singly or in combination of two or more of them during polymerization.

The intrinsic viscosity (as measured at 25°C in a 1 : 1 (by weight) mixed solution of phenol and tetrachloroethane) of the thermoplastic polyester-based resin (A) used in the present invention is preferably 0.4 to 1.2 dl/g, more preferably 0.6 to 1.0 dl/g. If the intrinsic viscosity is less than 0.4 dl/g, mechanical strength or impact resistance tends to be low. On the other hand, if the intrinsic viscosity exceeds 1.2 dl/g, flowability during molding tends to be poor.

### (Polymer-type organophosphorus flame retardant (B) whose main chain has polyester structure)

A polymer-type organophosphorus flame retardant (B) whose main chain has a polyester structure used in the present invention can be represented by the following general formula 1. In the general formula 1, X, Y, and Z are each a hydrocarbon group, and at least one of X, Y, and Z is a hydrocarbon group containing a phosphorus atom. The polymer-type organophosphorus flame retardant (B) whose main chain has a polyester structure can be preferably represented by the following general formula 2. The lower limit of n is preferably 2, more preferably 3, particularly preferably 5. If n is less than 2, crystallization of the thermoplastic polyester-based resin tends to be inhibited or mechanical strength tends to be low. The upper limit of n is not particularly limited, but an excessive increase in molecular weight tends to have an adverse effect on, for example, dispersibility. Therefore, the upper limit of n is preferably 40, more preferably 35, particularly preferably 30.

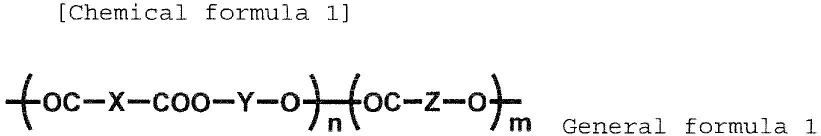

wherein n is an integer of 2 or more and m is an integer of 0 or more.

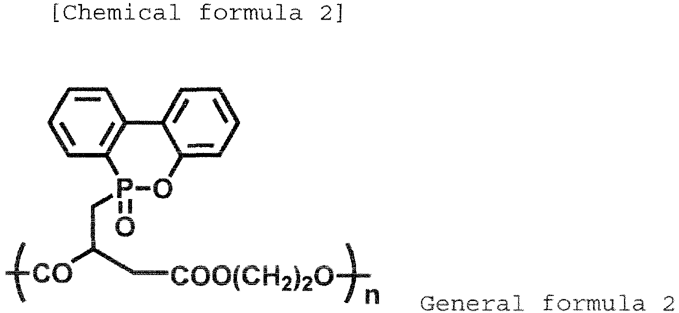

wherein n is an integer of 2 to 40.

A method for producing the polymer-type organophosphorus flame retardant (B) whose main chain has a polyester structure used in the present invention is not particularly limited, and may be a commonly-used polycondensation reaction.

The amount of the polymer-type organophosphorus flame retardant (B) whose main chain has a polyester structure contained is 5 to 80 parts by weight with respect to 100 parts by weight of the thermoplastic polyester-based resin (A) from the viewpoint of flame retardancy, moldability, and the mechanical strength of a molded body. From the viewpoint of flame retardancy, 8 parts by weight or more is preferred. From the viewpoint of moldability and the mechanical strength of a molded body, 70 parts by weight or less is preferred and 30 parts by weight or less is more preferred.

### (Amorphous thermoplastic super engineering plastic (C))

An amorphous thermoplastic super engineering plastic (C) used in the present invention is at least one resin selected from the group consisting of a polyetherimide resin, a polysulfone-based resin such as polysulfone, polyphenylsulfone, or polyethersulfone, and a polyarylate resin, and these resins may be used singly or in combination of two or more of them. The addition of this component makes it possible to improve long-term reliability in a high-temperature environment. Alternatively, a mixture with another polymer such as a polymer alloy or a polymer blend may be used. Among the above-mentioned amorphous thermoplastic super engineering plastics, a polyetherimide resin is particularly preferably used from the viewpoint of electric properties.

The polyetherimide resin is a polymer having a repeating unit containing an aliphatic, alicyclic, or aromatic ether unit and a cyclic imide group, and is not particularly limited as long as the polyetherimide resin is a polymer having melt moldability. Further, the polyetherimide resin may contain, in its main chain, a structural unit other than the cyclic imide and the ether bond, such as an aromatic, aliphatic, or alicyclic ester unit or an oxycarbonyl unit to the extent that the effect of the present invention is not impaired. In the present invention, a condensation product of 2,2-bis[4-(2,3-dicarboxyphenoxy)phenyl]propanedianhydride with m-phenylenediamine or p-phenylenediamine (e.g., ULTEM® commercially available from SABIC Innovative Plastics) is preferably used from the viewpoint of melt moldability and cost.

The polysulfone-based resin is a thermoplastic resin having, in its main chain, aromatic ring groups and a sulfone group as a linking group between the aromatic ring groups, and is generally roughly divided into polysulfone, polyethersulfone, and polyphenylsulfone.

The polysulfone resin is a polymer typically having a structure represented by the following general formula 3. For example, "Udel®" commercially available from SOLVAY Advanced Polymers can be used from the viewpoint of melt moldability and cost.

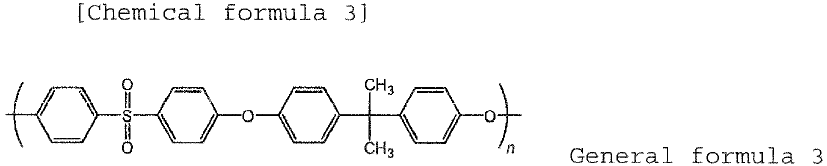

The polyethersulfone resin is a polymer obtained by Friedel-Crafts reaction of diphenylether chlorosulfone, and typically having a structure represented by the following chemical formula 4. For example, "Radel® A" commercially available from SOLVAY Advanced polymers can be used from the viewpoint of melt moldability and cost.

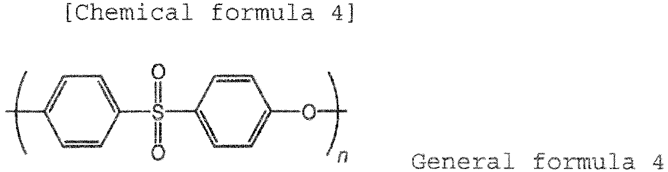

The polyphenylsulfone resin is a polymer typically having a structure represented by the following chemical formula 5. For example, "Radel® R" commercially available from SOLVAY Advanced polymers can be used from the viewpoint of melt moldability and cost.

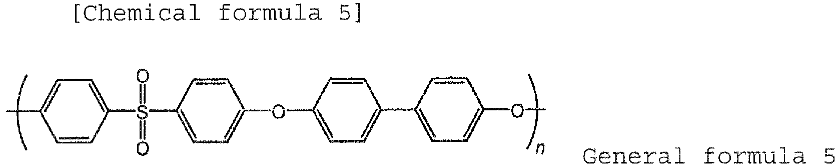

The polyarylate resin used in the present invention is a resin having a repeating unit containing an aromatic dicarboxylic acid and a bisphenol.

Specific examples of the bisphenol include 2,2-bis(4-hydroxyphenyl)propane, 2,2-bis(4-hydroxy-3,5-dimethylphenyl)propane, 4,4'-dihydroxydiphenyl sulfone, 4,4'-dihydroxydiphenyl ether, 4,4'-dihydroxydiphenyl sulfide, 4,4'-dihydroxydiphenylketone, 4,4'-dihydroxydiphenylmethane, and 1,1-bis(4-hydroxyphenyl)cyclohexane. These compounds may be used singly or in combination of two or more of them. Particularly, 2,2-bis(4-hydroxyphenyl)propane is preferred from the viewpoint of economy.

Specific examples of the aromatic dicarboxylic acid include terephthalic acid, isophthalic acid, orthophthalic acid, 1,5-naphthalenedicarboxylic acid, 2,6-naphthalenedicarboxylic acid, diphenic acid, 4,4'-dicarboxydiphenyl ether, bis(p-carboxyphenyl)alkane, and 4,4'-dicarboxydiphenyl sulfone. Among them, terephthalic acid and isophthalic acid are preferred.

The amount of the amorphous thermoplastic super engineering plastic (C) contained is 1 to 20 parts by weight, preferably 5 parts by weight or more with respect to 100 parts by weight of the thermoplastic polyester-based resin (A) from the viewpoint of improving strength retention after long-term heat test at high temperature. From the viewpoint of molding processability, that is, from the viewpoint of preventing a reduction in flowability and from the viewpoint of preventing a reduction in the initial mechanical strength of a molded body and an increase in product cost, 15 parts by weight or less is preferred.

### (Fibrous inorganic compound (D))

A fibrous inorganic compound (D) is added to a flame-retardant polyester-based resin composition constituting an electric/electronic component according to the present invention for the purpose of improving mechanical properties, heat resistance, and long-term reliability in a high-temperature environment.

The addition of the fibrous inorganic compound makes it possible to significantly improve, for example, strength, stiffness, or heat resistance.

Specific examples of the fibrous inorganic compound used in the present invention include glass fiber, carbon fiber, metal fiber, asbestos, potassium titanate whisker, and wollastonite. These fibrous inorganic compounds may be used singly or in combination of two or more of them.

The glass fiber used in the present invention may be known and commonly-used glass fiber, but from the viewpoint of workability, chopped strand glass fiber treated with a sizing agent is preferably used.

The glass fiber used in the present invention is preferably one whose surface is treated with a coupling agent to improve adhesion with the resin or may be one using a binder. Preferred examples of the coupling agent include alkoxysilane compounds such as γ-aminopropyltriethoxysilane and γ-glycidoxypropyltrimethoxysilane. Preferred examples of the binder include, but are not limited to, epoxy resins and urethane resins. The above-mentioned glass fibers may be used singly or in combination of two or more of them.

When glass fiber is used in the present invention, the fiber diameter thereof is preferably 1 to 20 µm, and the fiber length thereof is preferably 0.01 to 50 mm. If the fiber diameter is less than 1 µm, a desired reinforcing effect does not tend to be obtained, and if the fiber diameter exceeds 20 µm, the surface properties of a molded body or flowability tend(s) to be deteriorated. If the fiber length is less than 0.01 mm, a desired resin-reinforcing effect does not tend to be obtained, and if the fiber length exceeds 50 mm, the surface properties of a molded body or flowability tend(s) to be deteriorated.

In the present invention, the lower limit of the amount of the fibrous inorganic compound (D) contained is preferably 5 parts by weight, more preferably 10 parts by weight, even more preferably 15 parts by weight with respect to 100 parts by weight of the thermoplastic polyester-based resin (A). If the fibrous inorganic compound content is less than 5 parts by weight, there may be a case where a heat resistance- or stiffness-improving effect is insufficient. The upper limit of the fibrous inorganic compound content is preferably 120 parts by weight, more preferably 100 parts by weight, even more preferably 80 parts by weight. If the fibrous inorganic compound content exceeds 120 parts by weight, there may be a case where flowability, thin-wall moldability, or the surface properties of a molded body is/are deteriorated.

### (Non-fibrous inorganic compound (E))

A non-fibrous inorganic compound (E) is added to the flame-retardant polyester-based resin composition constituting the electric/electronic component according to the present invention for the purpose of improving mechanical properties, electric properties, heat resistance, or long-term reliability in a high-temperature environment.

The addition of the non-fibrous inorganic compound makes it possible to significantly improve, for example, strength, stiffness, heat resistance, flame retardancy, or electric properties.

Specific examples of the non-fibrous inorganic compound used in the present invention include glass flakes, glass beads, talc, mica, clay, calcium carbonate, barium sulfate, titanium oxide, and aluminum oxide. These non-fibrous inorganic compounds may be used singly or in combination of two or more of them.

In the present invention, the lower limit of the amount of the non-fibrous inorganic compound contained is preferably 5 parts by weight, more preferably 8 parts by weight, even more preferably 10 parts by weight with respect to 100 parts by weight of the thermoplastic polyester-based resin (A). If the non-fibrous inorganic compound content is less than 5 parts by weight, there may be a case where a heat resistance-or stiffness-improving effect is insufficient. The upper limit of the non-fibrous inorganic compound content is preferably 50 parts by weight, more preferably 40 parts by weight, even more preferably 30 parts by weight. If the non-fibrous inorganic compound content exceeds 50 parts by weight, there may be a case where flowability, thin-wall moldability, or the surface properties of a molded body is/are deteriorated.

### (Nitrogen compound)

A nitrogen compound may be added to the flame-retardant polyester-based resin composition used in the present invention. The combined use of the nitrogen compound and the organophosphorus flame retardant makes it possible to further improve flame retardancy. Examples of the nitrogen compound used in the present invention include a triazine-based compound such as a melamine-cyanuric acid adduct, melamine, or cyanuric acid and a tetrazole compound. Alternatively, the nitrogen compound may be melam that is a dimer of melamine and/or melem that is a trimer of melamine. Among them, a melamine-cyanuric acid adduct is preferred from the viewpoint of mechanical strength.

The melamine-cyanuric acid adduct used in the present invention is a compound formed by melamine (2,4,6-triamino-1,3,5-triazine) and cyanuric acid (2,4,6-trihydroxy-1,3,5-triazine) and/or its tautomer.

The melamine-cyanuric acid adduct can be obtained by, for example, a method in which a melamine solution and a cyanuric acid solution are mixed to form a salt or a method in which one of the solutions is added to and dissolved in the other solution to form a salt. The mixing ratio between melamine and cyanuric acid is not particularly limited, but is preferably close to equimolar, particularly preferably equimolar because a resulting adduct is less likely to impair the thermal stability of the thermoplastic polyester-based resin.

The average particle size of the melamine-cyanuric acid adduct used in the present invention is not particularly limited, but is preferably 0.01 to 250 µm, particularly preferably 0.5 to 200 µm because the strength properties and molding processability of a resulting composition are not impaired.

In the present invention, the lower limit of the amount of the nitrogen compound contained in the flame-retardant polyester-based resin composition is preferably 10 parts by weight, more preferably 20 parts by weight, even more preferably 25 parts by weight with respect to 100 parts by weight of the thermoplastic polyester-based resin. If the nitrogen compound content is less than 10 parts by weight, flame retardancy or tracking resistance tends to be deteriorated. The upper limit of the nitrogen compound content is preferably 100 parts by weight, more preferably 80 parts by weight. If the nitrogen compound content exceeds 100 parts by weight, extrusion processability tends to be worsened or the strength of a weld, mechanical strength, and moisture and heat resistance tend to be low.

### (Anti-dripping agent)

An anti-dripping agent, such as silicone oil, reactive group-containing silicone oil, or silica, particularly preferably a fluorine-based resin, may be added to the flame-retardant polyester-based resin composition used in the present invention to improve flame retardancy. When a fluorine-based resin is used for the resin composition according to the present invention, the amount of the fluorine-based resin used is preferably 2 parts by weight or less, more preferably 1 part by weight or less, even more preferably 0.5 parts by weight or less but is preferably 0.05 parts by weight or more, more preferably 0.1 parts by weight or more, even more preferably 0.3 parts by weight or more with respect to 100 parts by weight of the thermoplastic polyester-based resin. This is because if the amount of the fluorine-based resin used is too large, an acidic toxic gas is produced at the time of combustion for, for example, disposal or molding, and if the amount of the fluorine-based resin used is too small, an anti-dripping effect cannot be sufficiently obtained. When the fluorine-based resin is used in an amount within the above range, an anti-dripping effect is obtained, which is advantageous when dripping becomes a problem. Specific examples of the fluorine-based resin include fluorine-based resins such as polytetrafluoroethylene, polyvinylidene fluoride, tetrafluoroethylene/vinylidene fluoride copolymers, and tetrafluoroethylene/hexafluoropropylene copolymers and powders obtained by, in the presence of polytetrafluoroethylene, complexation with another polymer such as a polymer obtained by polymerization of a (meth)acrylic acid ester, an aromatic alkenyl compound, or vinyl cyanide.

### (Additive)

If necessary, to the flame-retardant polyester-based resin composition constituting the electric/electronic components according to the present invention may be added pigments, dyes, thermal stabilizers, light stabilizers, antioxidants, lubricants, plasticizers, antistatic agents, impact resistance-improving agents, releasing agents, nucleating agents, corrosion inhibitors, hydrolysis inhibitors, acid receiving agents, and antimicrobial agents.

### (Relative thermal index)

The relative thermal index of the electric/electronic component according to the present invention is preferably 140°C or higher, more preferably 150°C or higher to ensure long-term reliability in a high-temperature environment. If the relative thermal index is lower than 140°C, long-term heat resistance in practical use is not ensured, which becomes a problem. The relative thermal index is a temperature derived from a heat aging test performed in accordance with UL 746B. More specifically, after the completion of a heat resistance test at a certain temperature level, a tensile test, an IZOD impact test, and a dielectric breakdown strength measurement are performed in accordance with ASTM D-638, D-256, and D-149, respectively, and the time at which a retention rate reaches 50% is defined as a half-life at the certain, temperature, and half-lives at different temperatures are Arrhenius-plotted to determine, as a relative thermal index, the temperature at which the half-life is 100,000 hours. The relative thermal index is an indicator as to whether or not the electric/electronic component can withstand long-time continuous use at high temperature.

### (Heat-resistant life evaluation test)

The electric/electronic component according to the present invention preferably has System Thermal Class B or higher, more preferably System Thermal Class F or higher to ensure long-term reliability in a high-temperature environment, in which coil bobbins or the like are used, or various environments. The system thermal class is classified in terms of a temperature derived from a heat-resistant life evaluation test performed in accordance with UL 1446 on an insulation system (candidate material) including a molded body obtained using the flame-retardant polyester-based resin composition. A temperature range of 120 to 130°C is rated Class E, a temperature range of 130 to 155°C is rated Class B, a temperature range of 155 to 180°C is rated Class F, and a temperature range of 180 to 200°C is rated Class H. The system thermal class is an indicator as to whether or not the insulation system can withstand long-term continuous use in various environments at high temperature.

### (Kneading method)

A method for producing the flame-retardant polyester-based resin composition is not particularly limited, For example, the flame-retardant polyester-based resin composition can be produced by melt-kneading the thermoplastic polyester-based resin (A), the polymer-type organophosphorus flame retardant (B) whose main chain has a polyester structure, the amorphous thermoplastic super engineering plastic (C), the fibrous inorganic compound (D), the non-fibrous inorganic compound (E), and if necessary, another addictive with the use of any of various commonly-used kneaders. Examples of the kneaders include a single screw extruder and a twin screw extruder. Particularly, a twin screw extruder having high kneading efficiency is preferred.

### (Molding method)

A molded body corresponding to the electric/electronic component according to the present invention can be produced by molding the flame-retardant polyester-based resin composition by a commonly-known method. Specific examples of the method include molding methods such as injection molding, insert molding, injection press molding, in-mold molding, extrusion molding, and compression molding. Among them, injection molding and insert molding are preferred.

### (Electric/electronic component)

The electric/electronic component according to the present invention can withstand long-term continuous use at high temperature without using a halogen-based flame retardant, and therefore can be particularly suitably used as a component included in an electric/electronic device having an area required to have long-term heat resistance and flame retardancy.

### Examples of the component included in the

electric/electronic device include OA equipment components, power module components, inverter components, coil components, transformer components, relay components, switches, capacitors, stator switches, regulator cases, brush holders, IC carriers, plugs, sockets, fuse cases, sensors, lamp holders, flywheels, power generator components, motors, servomotors, solenoids, reactors, linear motor coils, rectifiers, DC/DC converters, microwave oven components, IH cooker components, components for electric or magnetic field resonance contactless power feeding devices, and components for radio-wave contactless power feeding devices.

From the viewpoint of practical use of the electric/electronic component, the comparative tracking index of the flame-retardant polyester-based resin composition is preferably 200 V or more, more preferably 225 V or more, particularly preferably 250 V or more.

From the viewpoint of practical use of the electric/electronic component, the volume resistivity of the flame-retardant polyester-based resin composition is preferably 10¹² Ω or more, more preferably 10¹³ Ω or more.

Examples of the OA equipment components include casings, paper trays, fuser components for OA equipment (e.g., frame covers, thermostat cradles), gears, coil frames, scanner housings, resin shafts, feeder guides, chassis, projector casings, and lamp holders. From the viewpoint of practical use, the distance between the OA equipment component and a heating roller is preferably 5 mm or less, more preferably 3 mm or less. From the viewpoint of heat durability in practical use, the flame-retardant polyester-based resin composition used in the present invention as a material for the OA equipment components preferably has a relative thermal index of 150°C or higher as determined by a heat durability test performed in accordance with the UL 746B standard.

Examples of the power module components or inverter components include sealing materials, insulating plates (sheets), and casings. From the viewpoint of practical use,
the power module or inverter preferably has two or more metal terminals attached thereto, particularly preferably three or more metal terminals attached thereto. Further, the lower limit of the rated voltage of a power module or inverter using the electric/electronic component according to the present invention is preferably 200 V, more preferably 400 V, particularly preferably 600 V. The upper limit of the rated voltage of the power module or inverter is preferably 6500 V, more preferably 1700 V. The rated current of the power module or inverter is preferably 10 A to 2500 A, more preferably 50 A to 600 A, even more preferably 75 A to 150 A. A device having such a rated current is suitable as a power module or inverter. From the viewpoint of tracking resistance, the creepage distance between the metal terminals is preferably 6.4 mm or more but 104 mm or less, particularly preferably 9.6 mm or more but 52.8 mm or less. From the viewpoint of heat durability in practical use, the flame-retardant polyester-based resin composition used in the present invention as a material for the power module components or inverter components preferably has a relative thermal index of 150°C or higher as determined by a heat durability test performed in accordance with the UL 746B standard.

Examples of the coil components, transformer components, and relay components include coil bobbins, bobbin cases, terminal blocks, insulating materials for rector cores, reactor cases, insulating materials for transformer cores, transformer cases, and relay cases. From the viewpoint of practical use, a preferred embodiment of a coil preferably has a primary input voltage of 100 V or more and an output of 5 W or more but 510 W or less. From the viewpoint of practical use, a preferred embodiment of a transformer preferably has an output of 0.1 W or more but 2000 W or less, more preferably 0.5 W or more but 1500 W or less. From the viewpoint of practical use, a preferred embodiment of a relay preferably has a rated voltage of 100 V or more but 700 V or less, more preferably 125 V or more but 660 V or less, and preferably has a rated current of 0.1 A or more but 100 A or less, more preferably 1 A or more but 50 A or less. From the viewpoint of heat resistance in practical use, a material for use in the coil components, transformer components, or relay components preferably has Thermal Class B (130°C) or higher, particularly preferably Thermal Class F (155°C) or higher as rated by a heat resistance reliability test performed on an insulation system in accordance with the UL 1446 standard.

Examples of the final application of the electric/electronic component according to the present invention include, but are not limited to, (plug-in) electric cars, fuel-cell cars, gasoline-electric hybrid cars, rail cars, air conditioners, air-conditioning systems, robots, solar power generation systems, wind-power generation systems, cogeneration systems, fuel-cell power generation systems, smart grids (e.g., smart towns, smart houses), uninterruptible power systems, superconducting magnetic energy storage (SMES) systems, microwave ovens, IH cookers, frequency converters, lighting devices, information devices, display devices, signal devices, and medical devices.

In such applications, weight reduction and high integration are often required. The electric/electronic component according to the present invention has thin-wall flame retardancy, and therefore the thickness of a molded body as the electric/electronic component according to the present invention may be 1 mm or less or 0.8 mm or less.

### EXAMPLES

Hereinbelow, the present invention will be specifically described by way of reference examples and examples, but is not limited thereto.

Resins and raw materials used in reference examples and comparative reference examples are listed below.
<Thermoplastic polyester-based resin (A1)>
   Polyethylene terephthalate resin (product name: EFG-70, manufactured by Bell Polyester Products, Inc.)
<Organophosphorus flame retardant (B1)>
   Material synthesized in Production Example 1
<Organophosphorus flame retardant (B2)>
   1,3-phenylenebis(dixylenyl)phosphate (product name: PX-200, manufactured by DAIHACHI CHEMICAL INDUSTRY CO, LTD.)
<Amorphous thermoplastic super engineering plastic (C1)>
   Polyether imide resin (product name: ULTEM1000®, manufactured by SABIC Innovative Plastics)
<Amorphous thermoplastic super engineering plastic (C2)>
   Polysulfone resin (product name: Udel® P-1700, manufactured by SOLVAY Advanced Polymers)
<Amorphous thermoplastic super engineering plastic (C3)>
   Polyarylate resin (product name: U-polymer® U-100, manufactured by UNITIKA LTD.)
<Fibrous inorganic compound (D1)>
   Glass fiber (product name: T-187H, manufactured by Nippon Electric Glass Co., Ltd.)
<Fibrous inorganic compound (D2)>
   Glass fiber (product name: FT-592S, manufactured by OWENS CORNING)
<Non-fibrous inorganic compound (E1)>
   Talc (product name: ROSE TALC, manufactured by NIPPON TALC Co., Ltd.)
<Non-fibrous inorganic compound (E2)>
   Mica (product name: A-41S, manufactured by YAMAGUCHI MICA CO., LTD.)
<Nitrogen compound (F1)>
   Melamine cyanurate (product name: MC4000, manufactured by Nissan Chemical Industries, Ltd)
<Anti-dripping agent (G1)>
   Polytetrafluoroethylene (product name: Fluon G350, manufactured by ASAHI GLASS CO., LTD.)

Evaluation methods in this specification are as follows.

### <Flame retardancy>

Obtained pellets were dried at 120°C for 3 hours and then subjected to injection molding using an injection molding machine (FN1000 manufactured by NISSEI PLASTIC INDUSTRIAL CO., LTD., clamping pressure: 80 t) under conditions of a cylinder setting temperature of 250 to 280°C and a mold temperature of 120°C to obtain a bar-shaped specimen of 127 mm × 12.7 mm × thickness 0.8 mm. The obtained specimen was used to evaluate frame retardancy in accordance with the UL 94 V-0 test standard.

### <Relative thermal index>

Obtained pellets were dried at 120°C for 3 hours and then subjected to injection molding using an injection molding machine (IE-75E-2A manufactured by TOSHIBA MACHINE CO., LTD. (clamping pressure: 75 t)) under conditions of a cylinder setting temperature of 250 to 280°C, a mold temperature of 120°C, and an injection rate of 30 cm³/sec. to produce a dumbbell-shaped specimen, a bar-shaped specimen, and a specimen having a thickness of 2 mm in accordance with ASTM D-638, D-256, and D-149, respectively. The obtained specimens were used to perform a tensile test, an IZOD impact test, and a dielectric breakdown strength measurement in accordance with UL 746B, to thereby measure a tensile strength, an IZOD-impact value, and a dielectric breakdown strength at 23°C. Then, a heat aging test was performed in accordance with UL 746B to calculate a relative thermal index.

### <Heat-resistant life evaluation test>

obtained pellets were dried at 140°C for 3 hours and then subjected to extrusion molding to obtain a sheet of 10 inches × 8 inches × 0.028 inches. A heat-resistant life evaluation test was performed in accordance with UL 1446 using the sheet as a ground insulation, enameled wires MW79 and MW80 based on the ANSI standard, and Nomex 410 as insulation paper.

### <Tracking resistance test>

Obtained pellets were dried at 140°C for 3 hours and then subjected to injection molding using an injection molding machine (FN1000 manufactured by NISSEI PLASTIC INDUSTRIAL CO., LTD., clamping pressure: 80 t) under conditions of a cylinder setting temperature of 250 to 280°C and a mold temperature of 120°C to obtain a flat plate of 120 mm × 120 mm × 3 mm. A measurement was performed in accordance with UL 746A using a tracking resistance tester (manufactured by MYS-TESTER Company Limited) and an about 0.1 wt% aqueous ammonium chloride solution as an aqueous electrolyte solution. A comparative tracking index determined by the measurement was set in 25 V increments.

### (Production Example 1)

In a vertical polymerization vessel equipped with a distillation tube, a rectification tube, a nitrogen introduction tube, and a stirrer, 100 parts by weight of 9, 10-dihydro-9-oxa-10-phosphaphenanthrene-10-oxide (HCA manufactured by SANKO CO., LTD.), 60 parts by weight of itaconic acid (purified itaconic acid, manufactured by FUSO CHEMICAL CO., LTD.) equimolar to HCA, and 160 parts by weight of ethylene glycol whose molar quantity is twice or more that of itaconic acid were placed, gradually heated from 120 to 200°C in a nitrogen gas atmosphere, and stirred for about 10 hours. Then, 0.1 parts by weight of antimony trioxide and 0.1 parts by weight of zinc acetate were added, and a polycondensation reaction was performed under vacuum or a reduced pressure of 1 Torr or less while the temperature was kept at 220°C and ethylene glycol was distilled. After about 5 hours, the amount of distilled ethylene glycol was extremely reduced, at which the reaction was considered to be completed.

### (Reference Examples 1 to 4, Reference Comparative Examples 1 and 2)

Raw materials shown in Table 1 were previously dryblended according to a formula (unit: parts by weight) shown in Table 1. The dry-blended material was supplied to a vent-type 44 mm ϕ co-rotation twin screw extruder (TEX 44 manufactured by The Japan Steel Works, LTD.) through a hopper inlet and melt-kneaded at a cylinder setting temperature of 250 to 280°C to obtain pellets. The obtained pellets were evaluated by the above-described evaluation methods. The evaluation results are shown in Table 1. It is to be noted that the flame retardancy of Reference Comparative Example 2 was rated V-1, and therefore evaluations for relative thermal index and heat life were not performed.

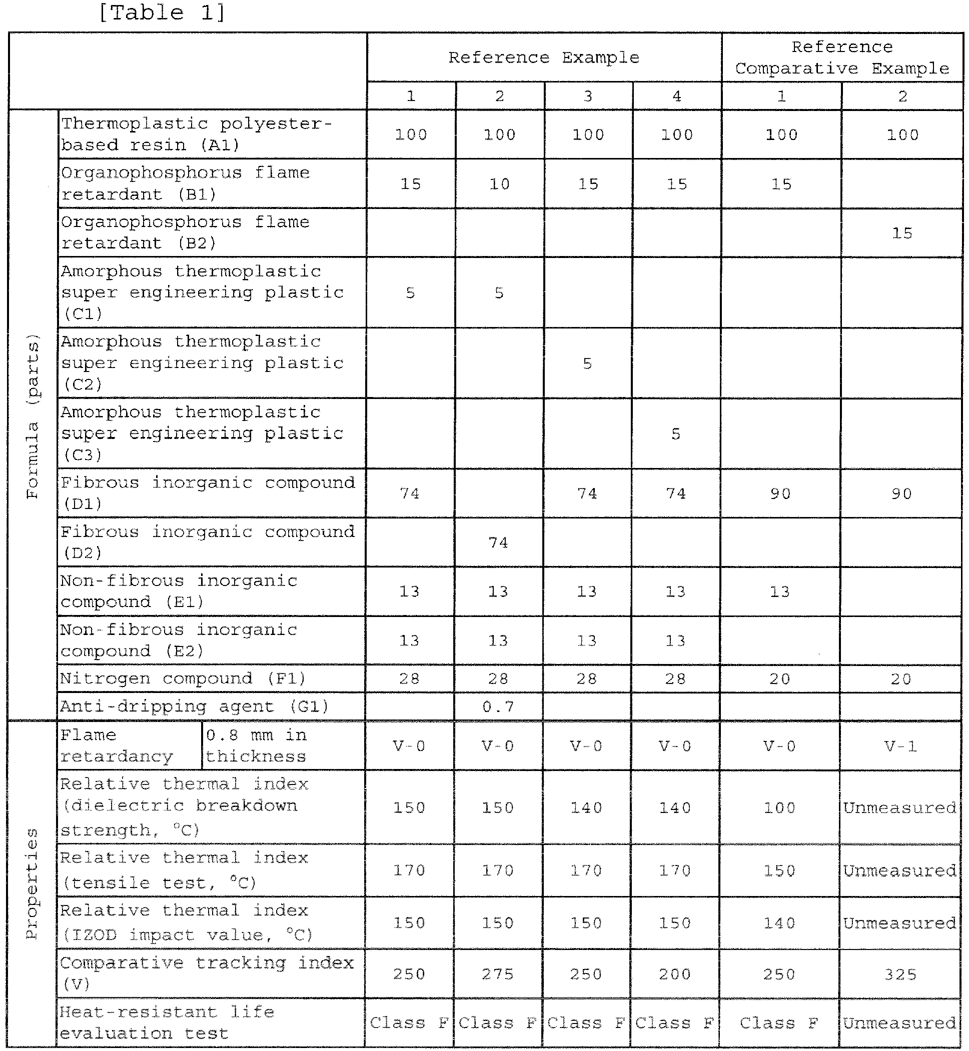

As can be seen from Table 1, compositions of Reference Examples 1 to 4 have high flame retardancy and can withstand long-term continuous use at high temperature in spite of the fact that a halogen-based flame retardant is not contained.

### (Example 1)

The pellets obtained in Reference Example 1 were dried at 140°C for 3 hours and then subjected to injection molding using an injection molding machine (J150E-P manufactured by The Japan Steel Works, LTD., clamping pressure: 150 t) under conditions of a cylinder setting temperature of 250 to 280°C and a mold temperature of 120°C to produce a molded body of 130 mm × 140 mm × 38 mm (height) designed to allow metal terminal blocks to be attached later in 7 positions. The molded body was used as a power module casing to produce a power module required to have a rated voltage of 1700 V, a rated current of 1200 A, and a relative thermal index of 150°C as determined in accordance with UL 746B.

### (Example 2)

The pellets obtained in Reference Example 1 were dried at 140°C for 3 hours and then subjected to injection molding using an injection molding machine (FN1000 manufactured by NISSEI PLASTIC INDUSTRIAL CO., LTD., clamping pressure: 80 t) under conditions of a cylinder setting temperature of 250 to 280°C and a mold temperature of 120°C to produce a molded body of 122 mm × 58 mm × 13 mm (height) designed to allow metal terminal blocks to be attached later in 18 positions. The molded body was used as a power module casing to produce a power module required to have a rated voltage of 600 V, a rated current of 100 A, and a relative thermal index of 150°C as determined in accordance with UL 746B.

### (Examples 3)

The pellets obtained in Reference Example 2 were dried at 140°C for 3 hours and then subjected to injection molding using an injection molding machine (FN1000 manufactured by NISSEI PLASTIC INDUSTRIAL CO., LTD., clamping pressure: 80 t) under conditions of a cylinder setting temperature of 250 to 280°C and a mold temperature of 120°C to produce a molded body of 122 mm × 58 mm × 13 mm (height) designed to allow metal terminal blocks to be attached later in 18 positions. The molded body was used as a power module casing to produce a power module required to have a rated voltage of 600 V, a rated current of 100 A, and a relative thermal index of 150°C as determined in accordance with UL 746B.

### (Example 4)

The pellets obtained in Reference Example 1 were dried at 140°C for 3 hours and then subjected to insertion molding using an injection molding machine (JT100RAD manufactured by The Japan Steel Works, LTD., clamping pressure: 100 t) under conditions of a cylinder setting temperature of 250 to 280°C and a mold temperature of 120°C to produce a molded body of 136 mm × 78 mm × 24 mm (height) having 19 metal pin-shaped terminals. The molded body was used as a power module casing to produce a power module required to have a rated voltage of 600 V, a rated current of 100 A, and a relative thermal index of 150°C as determined in accordance with UL 746B.

### (Example 5)

The pellets obtained in Reference Example 1 were dried at 140°C for 3 hours and then subjected to injection molding using an injection molding machine (J150E-P manufactured by The Japan Steel Works, LTD., clamping pressure: 150 t) with an 8-cavity mold under conditions of a cylinder setting temperature of 250 to 280°C and a mold temperature of 120°C to produce a molded body of 10 mm × 20 mm × 11 mm × 0.4 mm (thickness). The molded body was used as a relay case to produce a relay required to have an AC output of 10 A/250 V, a DC output of 10A/24 V, a control voltage of 24 V, and a relative thermal index of 150°C as determined in accordance with UL 746B.

### (Example 6)

The pellets obtained in Reference Example 1 were dried at 140°C for 3 hours and then subjected to molding using an injection molding machine (FN1000 manufactured by NISSEI PLASTIC INDUSTRIAL CO., LTD., clamping pressure: 80 t) under conditions of a cylinder setting temperature of 250 to 280°C and a mold temperature of 120°C to produce a molded body of ϕ 54 mm × 34 mm (height). The molded body was used as a choke coil core to produce a doughnut-shaped choke coil required to have a rated current of 15 A and Thermal Class B as rated in accordance with UL 1446.

### (Example 7)

The pellets obtained in Reference Example 1 were dried at 140°C for 3 hours and then subjected to molding using an injection molding machine (J150E-P manufactured by The Japan Steel Works, LTD., clamping pressure: 150 t) under conditions of a cylinder setting temperature of 250 to 280°C and a mold temperature of 120°C to produce a molded body of 140 mm × 140 mm × 95 mm. The molded body was used as a transformer casing to produce a transformer required to have a primary voltage of 0 to 200, 220, or 240 V, a secondary voltage of 0 to 100 V, a secondary current of 5 A, and Thermal Class F as rated by the above-described heat-resistant life evaluation test in accordance with UL 1446.

### (Example 8)

The pellets obtained in Reference Example 1 were dried at 140°C for 3 hours and then subjected to molding using an injection molding machine (J150E-P manufactured by The Japan Steel Works, LTD., clamping pressure: 150 t) under conditions of a cylinder setting temperature of 250 to 280°C and a mold temperature of 120°C to produce a molded body of 60 mm × 51.2 mm × 60 mm. The molded body was used as a reactor core to produce a reactor required to have a rated current of 1 to 35 A and Thermal Class F as rated in accordance with UL 1446.

### (Example 9)

The pellets obtained in Reference Example 1 were dried at 140°C for 3 hours and then subjected to molding using an injection molding machine (FE360S100ASE manufactured by NISSEI PLASTIC INDUSTRIAL CO., LTD., clamping pressure: 360 t) under conditions of a cylinder setting temperature of 250 to 280°C and a mold temperature of 120°C to produce a molded body of 400 mm × 100 mm. The molded body was used as a fuser frame required to have a relative thermal index of 150°C as determined in accordance with UL 746B. This frame is a component suitable for use in a fuser for OA equipment.

### (Example 10)

The pellets obtained in Reference Example 2 were dried at 140°C for 3 hours and then subjected to molding using an injection molding machine (FE360S100ASE manufactured by NISSEI PLASTIC INDUSTRIAL CO., LTD., clamping pressure: 360 t) under conditions of a cylinder setting temperature of 250 to 280°C and a mold temperature of 120°C to produce a molded body of 400 mm × 100 mm. The molded body was used as a fuser frame required to have a relative thermal index of 150°C as determined in accordance with UL 746B. This frame is a component suitable for use in a fuser for OA equipment.

## Claims

1. An electric/electronic component comprising a flame-retardant polyester-based resin composition containing 100 parts by weight of a thermoplastic polyester-based resin (A), 5 to 80 parts by weight of a polymer-type organophosphorus flame retardant (B) whose main chain has a polyester structure, 1 to 20 parts by weight of an amorphous thermoplastic super engineering plastic (C), 5 to 120 parts by weight of a fibrous inorganic compound (D), and 5 to 50 parts by weight of a non-fibrous inorganic compound (E).

2. The electric/electronic component according to claim 1, wherein the thermoplastic polyester-based resin (A) is a polyalkylene terephthalate.

3. The electric/electronic component according to claim 1 or 2, wherein the flame-retardant polyester-based resin composition has a relative thermal index of 140°C or higher for all three kinds of strength, impact, and electric properties specified in UL 746B.

4. The electric/electronic component according to any one of claims 1 to 3, wherein the flame-retardant polyester-based resin composition has Thermal Class B (130°C) or higher as rated by a heat-resistant life evaluation test specified in UL 1446.

5. The electric/electronic component according to any one of claims 1 to 4, wherein the flame-retardant polyester-based resin composition has a comparative tracking index of 200 V or more as determined by a tracking resistance test specified in UL 746A.

6. The electric/electronic component according to any one of claims 1 to 5, which is intended to be used when an input voltage of 100 V or higher is applied thereto.

7. The electric/electronic component according to any one of claims 1 to 6, which is a fuser component for OA equipment obtained by injection molding or insert molding of the flame-retardant polyester-based resin composition.

8. The electric/electronic component according to any one of claims 1 to 6, which is a coil component, a transformer component, or a relay component obtained by injection molding or insert molding of the flame-retardant polyester-based resin composition.

9. The electric/electronic component according to any one of claims 1 to 6, which is a power module component or inverter component that is obtained by injection molding or insert molding of the flame-retardant polyester-based resin composition and has a rated voltage of 400 V or higher and two or more metal terminals attached thereto.
